Europäisches Patentamt

European Patent Office

Office européen des brevets

(11) Publication number: **0 295 904**
**A2**

# (12) EUROPEAN PATENT APPLICATION

(21) Application number: **88305487.6**

(22) Date of filing: **16.06.88**

(51) Int. Cl.⁴: **H04M 3/50**

(30) Priority: **18.06.87 US 65308**

(43) Date of publication of application:
**21.12.88 Bulletin 88/51**

(84) Designated Contracting States:
**AT BE CH DE ES FR GB GR IT LI LU NL SE**

(71) Applicant: **OCTEL COMMUNICATIONS CORPORATION**
**890 Tasman Drive**
**Milpitas California 95035(US)**

(72) Inventor: **Kousa, Paavo T.**
**1321 Harriett Avenue**
**Campbell California 95008(US)**

(74) Representative: **Cross, Rupert Edward Blount et al**
**BOULT, WADE & TENNANT 27 Furnival Street London EC4A 1PQ(GB)**

(54) Address management system.

㊼ An address management system, for use in a message system, provides for address management in a message system comprising a base station and a plurality of node stations. An address mapping table is used to define how addresses are to be translated or interpreted, this table being searched by an address search module on receipt of a desired address from a user.

BLOCK DIAGRAM

SYSTEM ADMINISTRATION MODULES

ADDRESS MANAGEMENT MODULES

USER (SUBSCRIBER) INTERFACE MODULES

FIG.-1

EP 0 295 904 A2

Xerox Copy Centre

## ADDRESS MANAGEMENT SYSTEM

The present invention relates to an address management system, and more particularly to an address management system for products using telephone type numbering to address objects within some system. Such a system is here assumed to be a voice messaging system which is also part of a voice messaging network (several systems talking to each other). Typical addresses in such systems consist of subscribers' mailboxes at the local system, subscribers' mailboxes at the remote (networked) systems, and many special addresses such as home and guest mailboxes, group distribution lists, and the like.

Since these systems operate in the telephony environment, many of their feature requirements come from that source. For example, standard telephones must be usable for entering addresses (and commands) to the system. Users also want to be able to "dial addresses" as if they would be dialing phone numbers. At the same time, rich features of these systems require more flexibility and speed from addressing mechanism.

In large networks, it is not always possible to employ a number plan that would be free of somewhat conflicting addresses. It is also desirable to be able to use some existing (telephone) number plan that has been in use before the appearance of these new systems.

Consider the following example: The system has a subscriber mailbox numbered 665. The same system has access to the network where some other "node" is identified by "prefixing" its four-digit mailbox numbers by 66. Then an address 66 5782 would be a mailbox 5782 at that remote node. It is also assumed that the system administrator of the first system has no control over what mailbox numbers are used in the second system. The machine used to interpret the addresses has to use the number of digits in these addresses to solve the conflicting situation. Now, if this system were to "collect" address digits from the user while he/she enters these digits and then "prompt" the user indicating what he/she has really addressed, then the system would have no other way than to wait long enough after 6 6 5 to be reasonably assured that it can no longer be mailbox 5XXX at the remote node. Another way out of this is to require the user to enter some termination indication after the last digit of an address (which is not customary to the telephone users).

For the above example, assume that either "timeout" or "a terminator" will be used. But what if the user had entered 6 6 4 so far? Assuming there are no other conflicting addresses, it can now be assumed that the user wants to address mailbox 4XXX at the remote node. Therefore, the machine can now collect those three missing digits from the user and inform him/her about the progress immediately after collecting the last one.

According to this invention there is provided an address management system, for use in a message system having a plurality of mailboxes for storing messages and comprising a base message station and a plurality of node message stations, each of said stations having mailboxes each having a designated address, characterised by an address mapping table for storing address information defining how said mailbox addresses are to be translated or interpreted, and address search module means responsive to a desired address from a user for searching said address mapping table for providing an address identification corresponding to said desired address.

The present invention provides an address management system having means to implement various address plans for which not all components of an address are necessarily available for verification at the time of initial addressing (mailbox number at the remote node). The system can identify if a timeout (or a terminator) is needed for an address being dialed (or better yet, if the timeout is not needed).

An "alias" mechanism can be provided to cope with changing requirements of large address plans. This allows transitions in the address plan to be made less painful to the users. For example, assume a mailbox of a user needs to be renumbered from 334 to 7334 (for whatever reason). While directories are being prepared and distributed, an alias can be used to "convert" the old 334 mailbox number to the new 7334, so that messages addressed with the old mailbox number would still get to their correct destination.

This invention will now be described by way of example with reference to the drawings, in which:-

Fig. 1 depicts a block diagram of an address management system according to the invention;

Fig. 2 depicts a block diagram of an address management module of the system of Fig. 1;

Fig. 3 depicts a diagram of an entry in an address mapping table of the system of Fig. 1;

Figs. 4-8 depict address formation examples for the system of Fig. 1; and

Figs. 9-12 depict dialing examples in an address management system according to the invention.

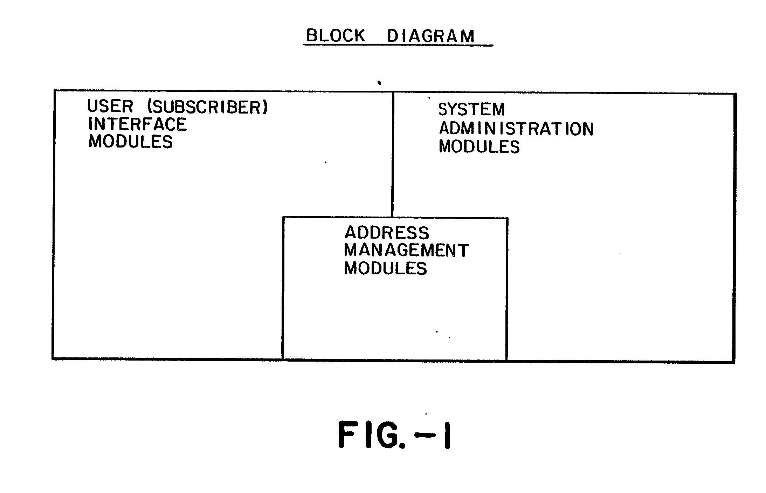

Fig. 1 depicts the placement of address management modules in relation to the other modules involved in address management. The upper interface modules feed the address information they get from the users to the address management modules, which return qualifying information back to the user interface. This contains information such as: cannot be known address, could be known address but cannot identify yet (get more address digits), is so far identified address (identification provided) but could be something else if more address digits are received, and is a known address (identification provided), and cannot be anything else.

The system administration modules interface with address management modules by feeding in the address plan and its changes. This is information such as: a new mailbox has been added, a mailbox has been deleted or its number changed, mailboxes at the network node (NN) are to be addressed as follows, and the like. The address management modules provide feedback; address accepted and table updated, address deleted, cannot add requested address because it is already in use, etc.

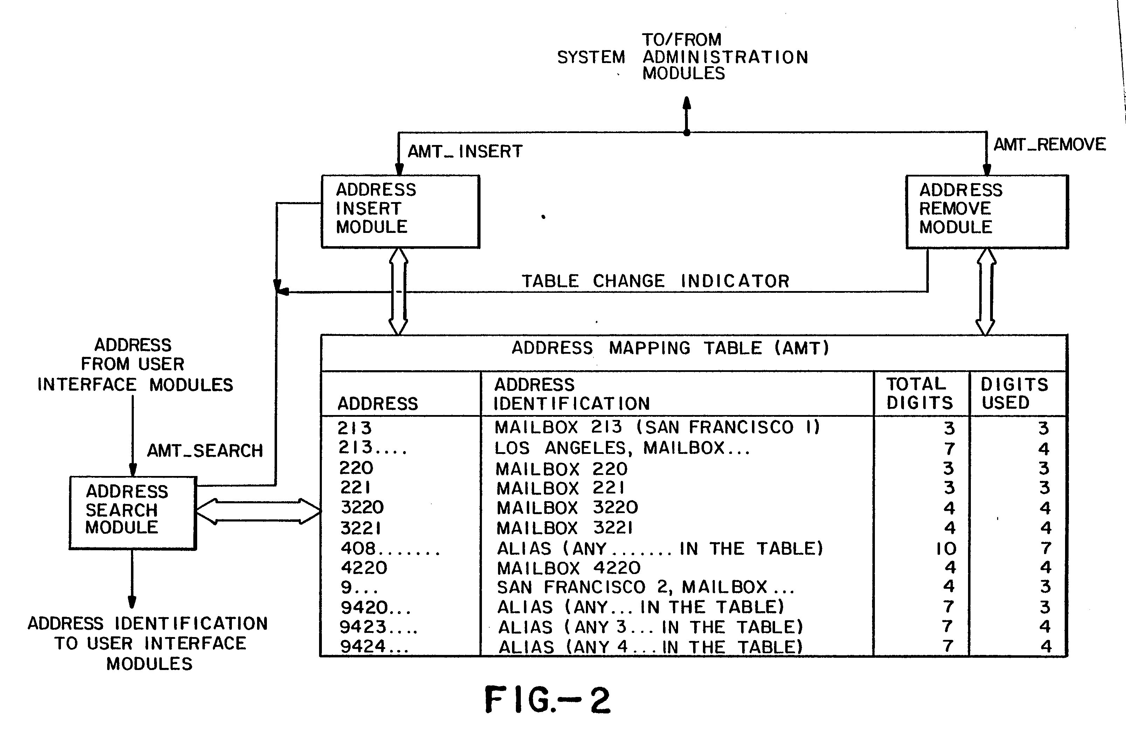

Fig. 2 depicts the internal organization of the address management modules. Definitions of addresses are kept in a large table called the Address Mapping Table (AMT). The AMT defines how the addresses are to be translated and interpreted. The table is created and maintained by Insert and Remove modules based on the descriptions received from the system administration modules.

The address search module performs searching through the AMT table and interprets the results. It can be invoked to search an entire address at once. Core parts of the search module are also used by insert and remove modules to locate the proper place in the table for a new address entry and, respectively, an entry to be deleted.

Refresh mechanism is provided so that the administration modules can update the table while there is an incomplete address input pending. This is essential in large systems where there is high probability that someone is "always dialing an address." Instead of "locking" the system administrator out while an address is being dialed, the system allows the administrator to modify the address plan at any time. If the table is modified while there are incomplete address searches going on, those searches are restarted (assuming that any collected search history will be invalid).

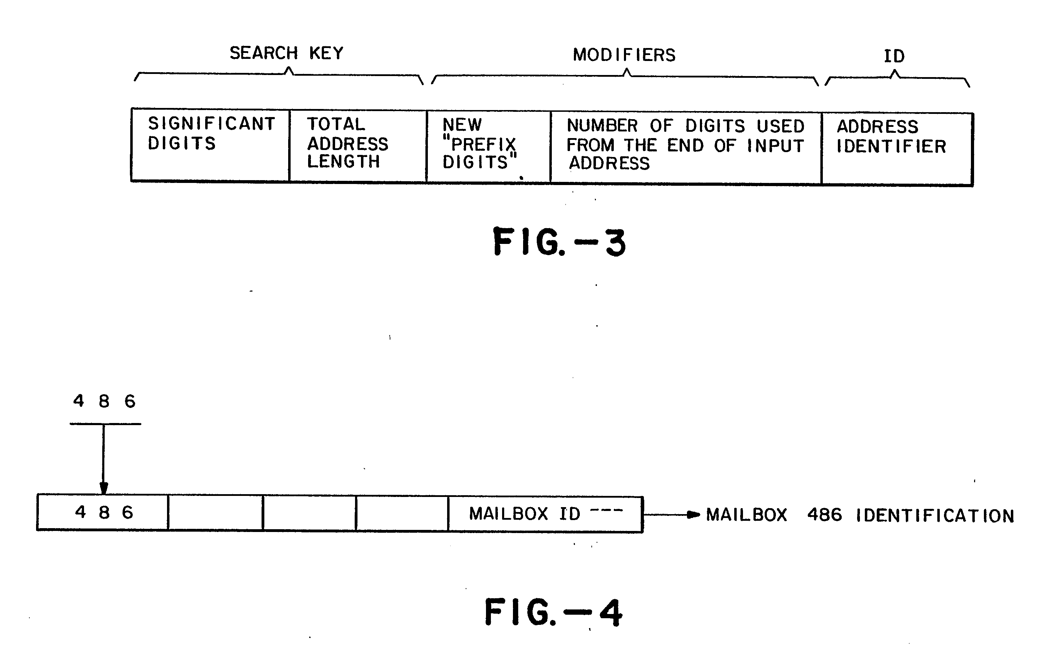

Each entry in the AMT defines one address. This definition is composed of the search key, modifiers, and the identification of the address, as depicted in Fig. 3. Search key is used by search modules to identify the table entry to match the incoming address (if any). Modifiers are used to define how to modify the address string before either searching the table again or passing the result back to search originator. Identification is used mainly by the client modules to identify the object defined by the addresses. However, one ID value is used to identify that the entry in the table is an alias, and the table should be search again with the address "modified" based on information in this entry. Following is a SYMBOLIC definition of the address entry in the AMT (machine format may, and probably should, be different).

In Fig. 3, significant digits are used in address search to compare with the input address. Comparing is done digit by digit, first digit of address with the first digit of this field, and so on. If all digits defined in this field match with the input address and it has total number of digits defined in the next field, then the input address matches with this table entry.

The total address length defines how many digits are needed in the input address to match with this entry. This allows entering more digits in input that there are significant digits in the table entry. These additional digits can then be used to form a new (output) address, which is either used to search the table again or passed to the requesting client module.

The new prefix digits are appended to the beginning of the output address (used only if the entry is an alias).

The number of digits used defines how many digits are to be taken from the end of input (search) address, to be appended to the end of output address. (Note that if no new prefix digits are given, this will define the entire output address.)

Zero in the address identifier field indicates that this entry is an alias and is used to search another address in the table.

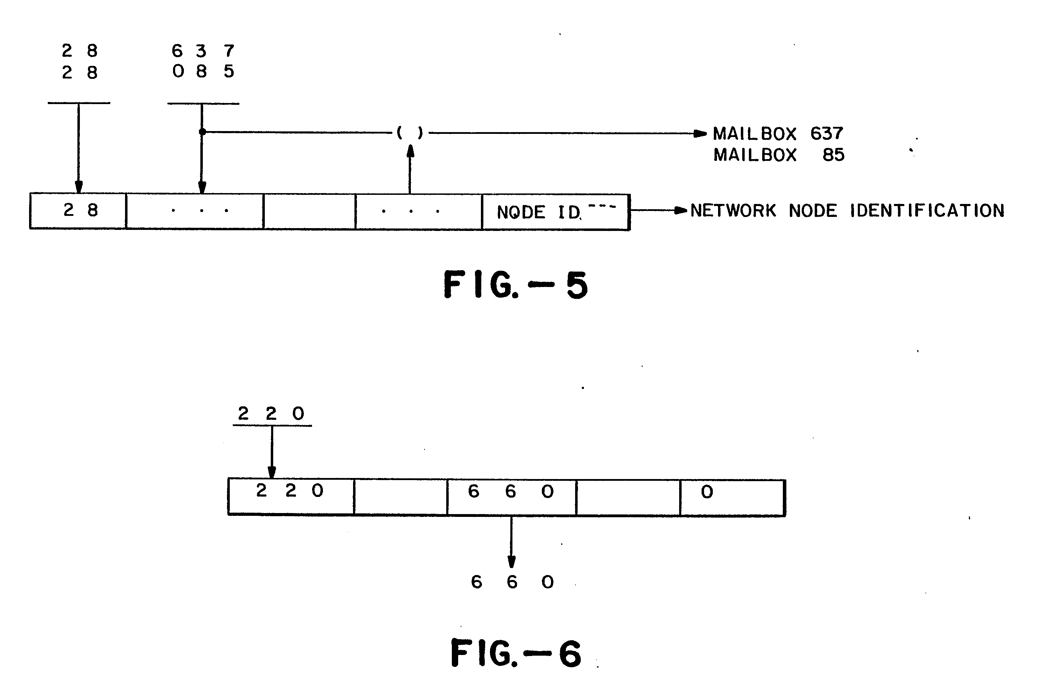

Figs. 4-8 depict address formation examples. Fig. 4 defines a mailbox 486. All address digits are identified as significant and no "additional" digits are required in dialing the address. No modification is done. As soon as all three digits are received, a positive identification is obtained.

Fig. 5 depicts a situation typical for an address on the network where the final mailbox at the remote destination is not identifiable by the sending system. Address is defined as 28 to identify the "remote node" and three more digits needed for a mailbox number at that node. (Note that the actual identification of the node is done based on the ID and prefix 28 is provided for users' benefit.) Another input address contains 0 in place of a first mailbox number digit. Leading zeros are "dropped off" by the conversion, so that output becomes 85.

Fig. 6 depicts an alias defining direct address translation from address 220 to 660 (typically a mailbox number). All digits in input are significant and no use of the input digits are made in forming the output address. "New Prefix" digits in the table will form the entire output address. The table is then searched again with the output address (660).

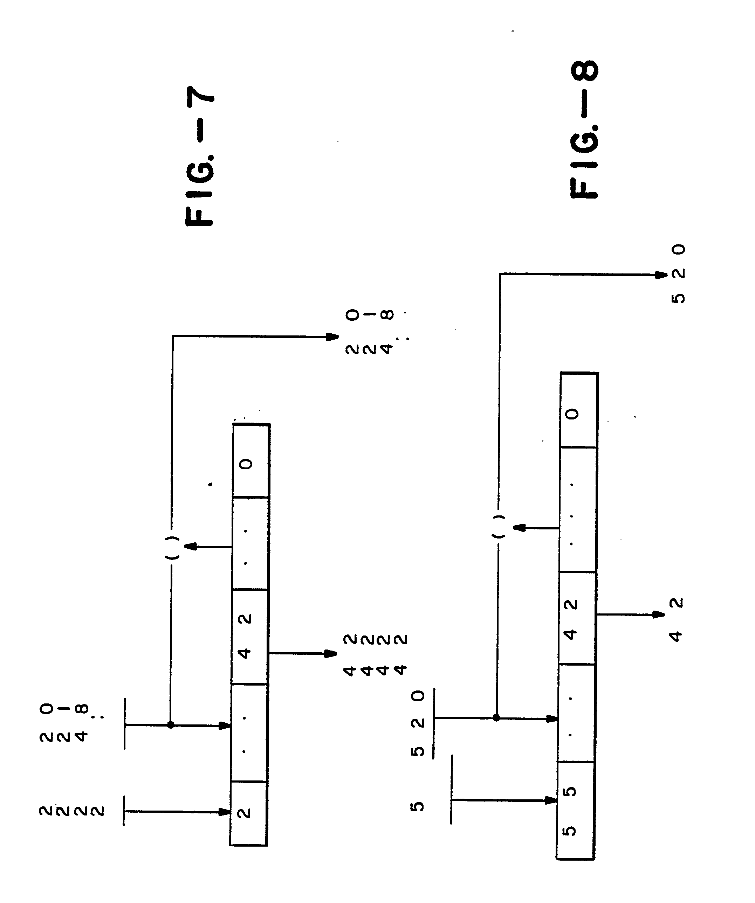

Fig. 7 depicts a type of an alias which provides translation from three digit numbers beginning with 2, to four digit numbers beginning with 42. Any 2?? in input will match the entry, and prefix 42 will start the output address. Two trailing digits of the input address are appended to the end of output address.

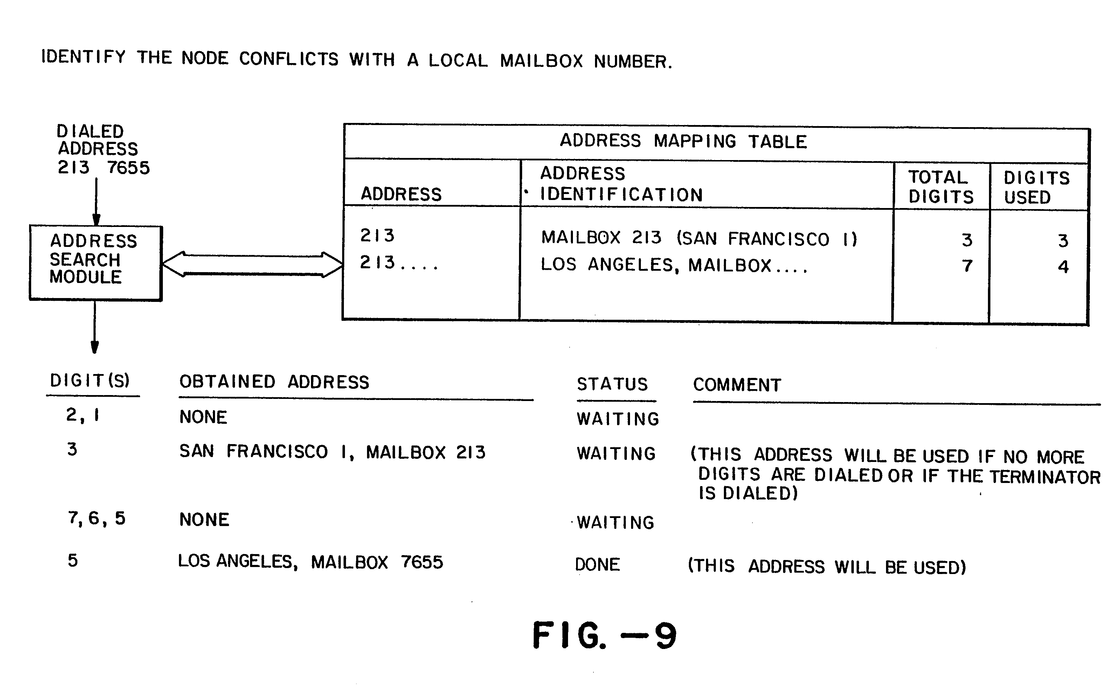

Fig. 8 depicts an alias which defines that any four digit address beginning with 55 will be translated to five digit address beginning with 425. Note that this translation could have been obtained by using the form defined before this one. This type of translation has its value in being able to perform translations in limited table space. (Each significant digit used in these translations must be stored in the table, thus needing more table space.

Figs. 9-12 depict dialing examples. Fig. 9 depicts a dialing sequence for a network address where a prefix used to identify the node conflicts with a local mailbox number.

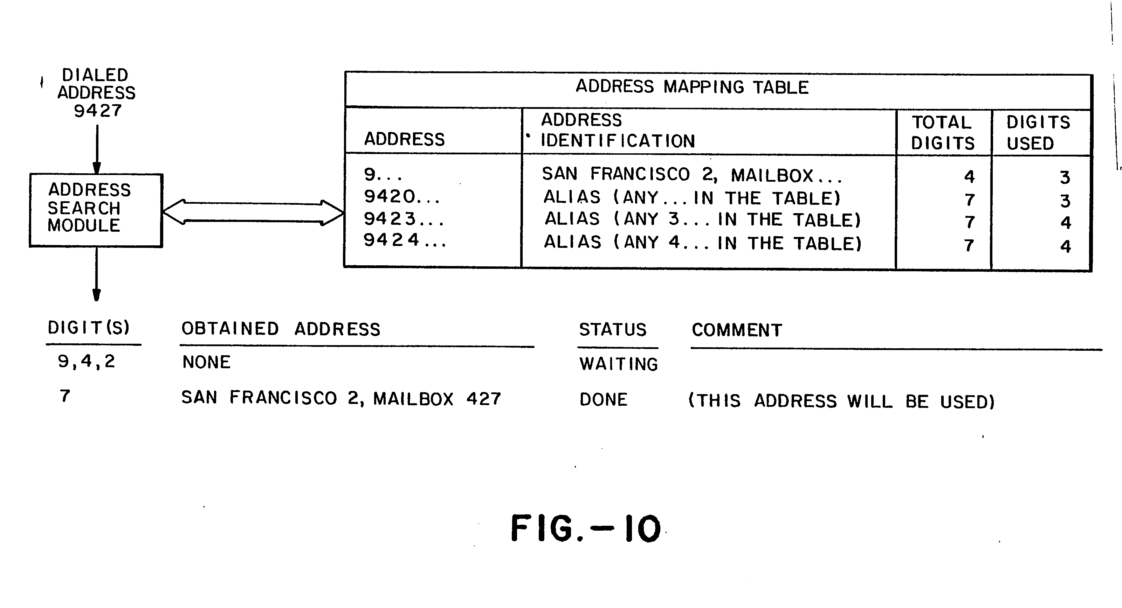

Fig. 10 depicts a dialing sequence for a node address which is contained in a group possible conflicting with three aliases in the table. After the fourth digit of this address is entered, the address "becomes unique" and there is no need to wait for more digits.

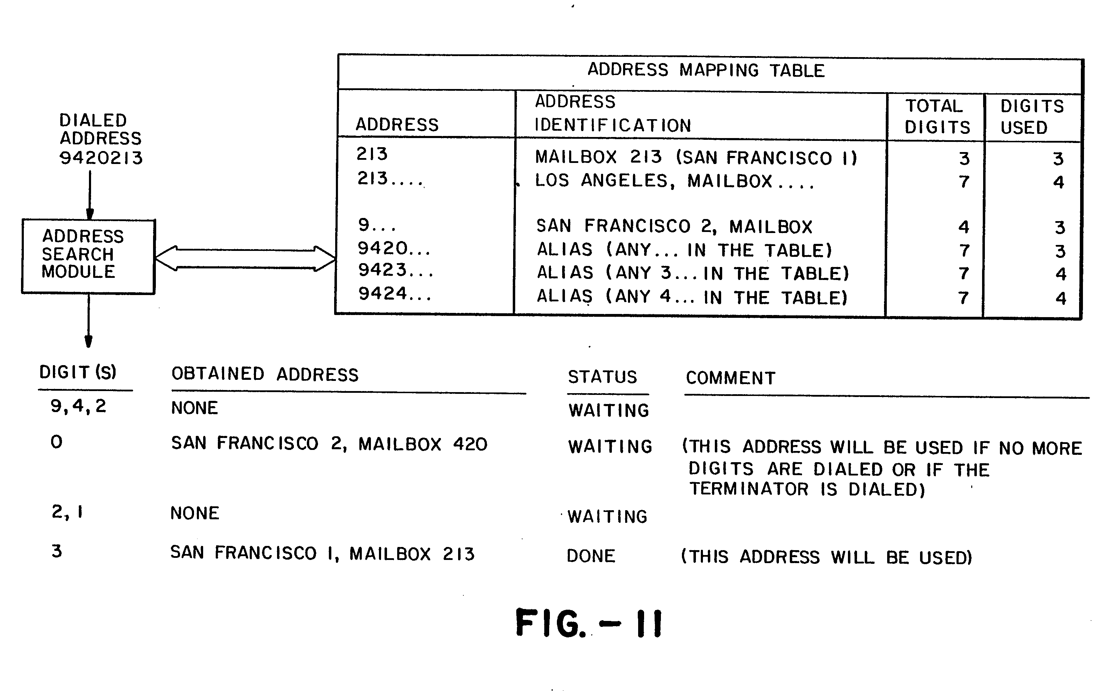

Fig. 11 depicts a dialing sequence using alias to translate .seven digit address to a three digit local mailbox number. After the fourth digit is entered, the address "seems" to point to a mailbox on another system. However, since it is known to be conflicting address, more time for the user is given.

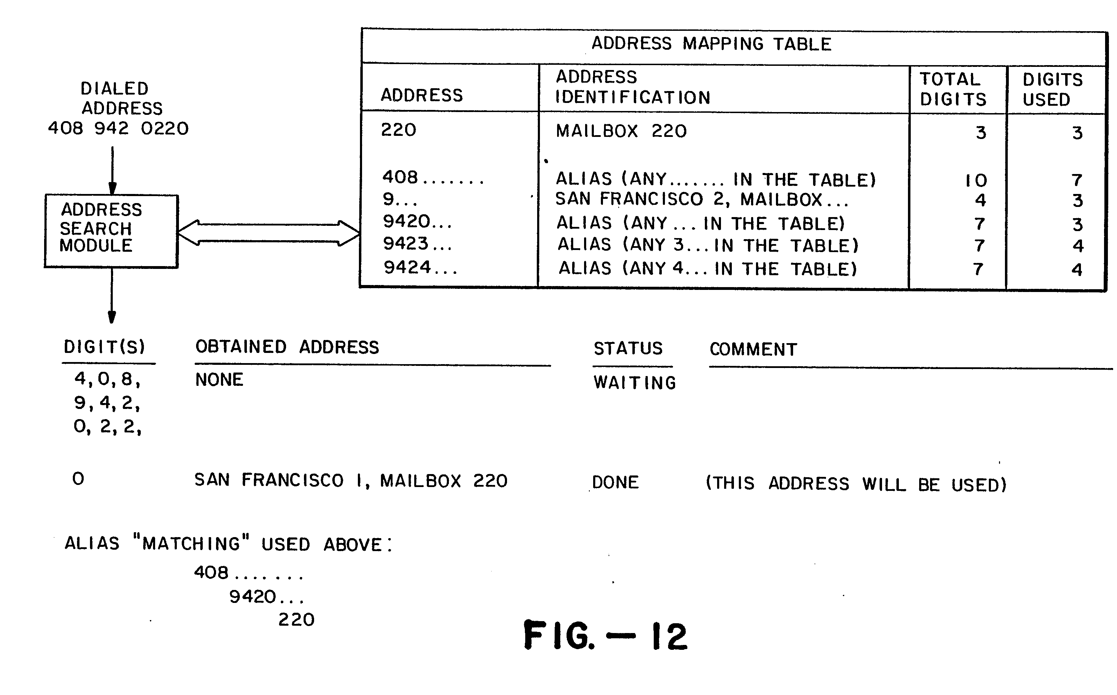

Fig. 12 depicts a dialing sequence where two "nested" aliases are used in translation. Note that this type of an address is always unique (no waiting required) as long as the first alias (in this case 4078.....) is unique.

## Claims

1. An address management system, for use in a message system having a plurality of mailboxes for storing messages and comprising a base message station and a plurality of node message stations, each of said stations having mailboxes each having a designated address, characterised by an address mapping table for storing address information defining how said mailbox addresses are to be translated or interpreted, and address search module means responsive to a desired address from a user for searching said address mapping table for providing an address identification corresponding to said desired address.

2. A voice message system having an address management system as claimed in Claim 1.

## BLOCK DIAGRAM

| USER (SUBSCRIBER) INTERFACE MODULES | SYSTEM ADMINISTRATION MODULES |
|---|---|

ADDRESS MANAGEMENT MODULES

## FIG. -1

Neu eingereicht / Newly filed
Nouvellement déposé

EP 0 295 904 A2

FIG.-2

TO/FROM
SYSTEM ADMINISTRATION
MODULES

AMT_INSERT

AMT_REMOVE

ADDRESS
INSERT
MODULE

ADDRESS
REMOVE
MODULE

TABLE CHANGE INDICATOR

ADDRESS
FROM USER
INTERFACE MODULES

AMT_SEARCH

ADDRESS
SEARCH
MODULE

ADDRESS IDENTIFICATION
TO USER INTERFACE
MODULES

### ADDRESS MAPPING TABLE (AMT)

| ADDRESS | ADDRESS IDENTIFICATION | TOTAL DIGITS | DIGITS USED |
|---|---|---|---|
| 213 | MAILBOX 213 (SAN FRANCISCO 1) | 3 | 3 |
| 213.... | LOS ANGELES, MAILBOX... | 7 | 4 |
| 220 | MAILBOX 220 | 3 | 3 |
| 221 | MAILBOX 221 | 3 | 3 |
| 3220 | MAILBOX 3220 | 4 | 4 |
| 3221 | MAILBOX 3221 | 4 | 4 |
| 408....... | ALIAS (ANY....... IN THE TABLE) | 10 | 7 |
| 4220 | MAILBOX 4220 | 4 | 4 |
| 9... | SAN FRANCISCO 2, MAILBOX... | 4 | 3 |
| 9420... | ALIAS (ANY... IN THE TABLE) | 7 | 3 |
| 9423.... | ALIAS (ANY 3... IN THE TABLE) | 7 | 4 |
| 9424... | ALIAS (ANY 4... IN THE TABLE) | 7 | 4 |

EP 0 295 904 A2

EP 0 295 904 A2

| SEARCH KEY | | MODIFIERS | | ID |
|---|---|---|---|---|
| SIGNIFICANT DIGITS | TOTAL ADDRESS LENGTH | NEW "PREFIX DIGITS" | NUMBER OF DIGITS USED FROM THE END OF INPUT ADDRESS | ADDRESS IDENTIFIER |

## FIG.-3

4  8  6

| 4  8  6 | | | | MAILBOX ID --- | → MAILBOX 486 IDENTIFICATION |

## FIG.-4

Neu eingereicht / Newly filed
Nouvellement déposé
(R 35)

EP 0 295 904 A2

28
28

6 3 7
0 8 5

( ) ———————→ MAILBOX 637
MAILBOX  85

| 2 8 | · · · | | · · · | NODE ID --- | →NETWORK NODE IDENTIFICATION |

## FIG. – 5

2  2  0

| 2  2  0 | | 6  6  0 | | 0 |

6  6  0

## FIG. – 6

FIG. -7

FIG. -8

EP 0 295 904 A2

IDENTIFY THE NODE CONFLICTS WITH A LOCAL MAILBOX NUMBER.

DIALED
ADDRESS
213 7655

```
ADDRESS
SEARCH
MODULE
```

| ADDRESS MAPPING TABLE | | | |
|---|---|---|---|
| ADDRESS | ADDRESS IDENTIFICATION | TOTAL DIGITS | DIGITS USED |
| 213 | MAILBOX 213 (SAN FRANCISCO I) | 3 | 3 |
| 213.... | LOS ANGELES, MAILBOX.... | 7 | 4 |
| | | | |

| DIGIT(S) | OBTAINED ADDRESS | STATUS | COMMENT |
|---|---|---|---|
| 2, 1 | NONE | WAITING | |
| 3 | SAN FRANCISCO I, MAILBOX 213 | WAITING | (THIS ADDRESS WILL BE USED IF NO MORE DIGITS ARE DIALED OR IF THE TERMINATOR IS DIALED) |
| 7, 6, 5 | NONE | WAITING | |
| 5 | LOS ANGELES, MAILBOX 7655 | DONE | (THIS ADDRESS WILL BE USED) |

# FIG. —9

EP 0 295 904 A2

EP 0 295 904 A2

DIALED
ADDRESS
9427

ADDRESS
SEARCH
MODULE

| ADDRESS MAPPING TABLE | | | |
|---|---|---|---|
| ADDRESS | ADDRESS IDENTIFICATION | TOTAL DIGITS | DIGITS USED |
| 9... | SAN FRANCISCO 2, MAILBOX... | 4 | 3 |
| 9420... | ALIAS (ANY... IN THE TABLE) | 7 | 3 |
| 9423... | ALIAS (ANY 3... IN THE TABLE) | 7 | 4 |
| 9424... | ALIAS (ANY 4... IN THE TABLE) | 7 | 4 |

| DIGIT(S) | OBTAINED ADDRESS | STATUS | COMMENT |
|---|---|---|---|
| 9,4,2 | NONE | WAITING | |
| 7 | SAN FRANCISCO 2, MAILBOX 427 | DONE | (THIS ADDRESS WILL BE USED) |

# FIG.—10

DIALED
ADDRESS
9420213

ADDRESS
SEARCH
MODULE

| ADDRESS MAPPING TABLE | | | |
|---|---|---|---|
| ADDRESS | ADDRESS IDENTIFICATION | TOTAL DIGITS | DIGITS USED |
| 213 | MAILBOX 213 (SAN FRANCISCO 1) | 3 | 3 |
| 213.... | LOS ANGELES, MAILBOX.... | 7 | 4 |
| 9... | SAN FRANCISCO 2, MAILBOX | 4 | 3 |
| 9420... | ALIAS (ANY... IN THE TABLE) | 7 | 3 |
| 9423... | ALIAS (ANY 3... IN THE TABLE) | 7 | 4 |
| 9424... | ALIAS (ANY 4... IN THE TABLE) | 7 | 4 |

| DIGIT(S) | OBTAINED ADDRESS | STATUS | COMMENT |
|---|---|---|---|
| 9,4,2 | NONE | WAITING | |
| 0 | SAN FRANCISCO 2, MAILBOX 420 | WAITING | (THIS ADDRESS WILL BE USED IF NO MORE DIGITS ARE DIALED OR IF THE TERMINATOR IS DIALED) |
| 2,1 | NONE | WAITING | |
| 3 | SAN FRANCISCO 1, MAILBOX 213 | DONE | (THIS ADDRESS WILL BE USED) |

# FIG. – 11

Neu eingereicht / Newly filed
Nouvellement déposé
(R 35)

DIALED
ADDRESS
408 942 0220

| ADDRESS MAPPING TABLE | | | |
|---|---|---|---|
| ADDRESS | ADDRESS IDENTIFICATION | TOTAL DIGITS | DIGITS USED |
| 220 | MAILBOX 220 | 3 | 3 |
| 408....... | ALIAS (ANY....... IN THE TABLE) | 10 | 7 |
| 9... | SAN FRANCISCO 2, MAILBOX... | 4 | 3 |
| 9420... | ALIAS (ANY... IN THE TABLE) | 7 | 3 |
| 9423... | ALIAS (ANY 3... IN THE TABLE) | 7 | 4 |
| 9424... | ALIAS (ANY 4... IN THE TABLE) | 7 | 4 |

ADDRESS
SEARCH
MODULE

| DIGIT(S) | OBTAINED ADDRESS | STATUS | COMMENT |
|---|---|---|---|
| 4,0,8,<br>9,4,2,<br>0,2,2, | NONE | WAITING | |
| O | SAN FRANCISCO I, MAILBOX 220 | DONE | (THIS ADDRESS WILL BE USED) |

ALIAS "MATCHING" USED ABOVE:

408.......
  9420...
    220

FIG. — 12

EP 0 295 904 A2